# EUROPEAN PATENT APPLICATION

(11) **EP 2 722 244 A1**
(43) Date of publication of application: **23.04.2014**
(21) Application number: 13188810.9
(22) Date of filing: 16.10.2013
(51) Int. Cl.: B60W 30/18, B60K 26/00, B60T 7/04, B60T 7/10, B60K 26/02

(54) **Driving control system of a vehicle**

(30) Priority: 18.10.2012 CZ 20120715
(71) Applicant: Kotka, Tomas, 25101 Ricany (CZ)
(72) Inventor: Kotka, Tomas, 25101 Ricany (CZ)
(74) Representative: Rezac, Petr

(57) **Abstract**

Driving control system of a vehicle equipped with an automatic gearbox comprising an joystick controller (1) with a handle providing electrical connection for operating at least one actuating motor (1) associated with a mechanism for controlling a vehicle pedal (5) where the actuating motor (1) is coupled with a first arm of a two-armed lever (3) located outside the vehicle cab behind its wall (2) and the second arm of the two-armed lever (3) is coupled with a draw bar (4) passing through the cab wall (2) and coupled with a vehicle controlling pedal (5).

The driving control system may comprise a first actuating motor (1) with a mechanism for controlling the accelerator pedal and a second actuating motor (1) with a mechanism for controlling the brake pedal.

## Description

### FIELD

The invention relates to a driving control system of a vehicle equipped with an automatic gearbox comprising a joystick controller electrically connected to an actuating motor associated with a mechanism for controlling vehicle pedals.

### BACKGROUND ART

There are devices known from the prior art, which are primarily intended for people, who due to their disability are unable either at all or only partially control and actuate vehicle pedals or even the car steering. As an example, reference is made to a system described in U.S. Patent 4,722,416, in which the movement of the pedals and steering column is initiated by a set of hydraulic cylinders controlled by electrical signals from a joystick located under the steering wheel

According to U.S. Patent Application No. 2005/0274563 the pedal and steering column movements are derived from the rotation of a joystick controlling electric motors driving racks, wherein the motions of which are transmitted through other mechanisms on the vehicle pedals. In both cases, the control mechanisms are placed in the vehicle cab, above the pedals, what may limit to some extent, the driver's comfort.

### SUMMARY OF THE INVENTION

The object of the present invention is to provide a simple device for controlling vehicle pedals, which device can serve to both disabled persons and ordinary drivers. The ordinary drivers could make use of such a device particularly in the situations, where they have to frequently face traffic congestions when their limbs are exposed to a constant alternating pressing and relieving the brake and accelerator pedals for a long time. This may occur even in the event that their vehicles are equipped with an automatic gearbox.

According to the invention the driving control system of a vehicle equipped with an automatic gearbox comprises a joystick controller with a handle providing electrical connection for operating at least one actuating motor associated with a mechanism for controlling a vehicle pedal. The object of the invention is achieved in that the actuating motor is coupled with a first arm of a two-armed lever located outside the vehicle cab behind its wall while the second arm of the two-armed lever is coupled with a draw bar passing through the cab wall and coupled with a vehicle controlling pedal. The following are additional advantageous embodiments of the invention, which may further develop or specify in more details its essential features.

The actuating motor is coupled with the first arm of the two-armed lever by means of a slotted link. The draw bar consists of a threaded rod coupled to the two-armed lever on the first end and to a slotted link on the second end.

The driving control system of a vehicle comprises a first actuating motor with a mechanism for controlling the accelerator pedal and a second actuating motor with a mechanism for controlling the brake pedal.

The handle of the joystick controller is linearly movable from its middle position to a front position and to a rear position to produce respective electric signals for a control circuits of the actuating motors and vertically movable in the middle position, wherein in the front position the handle operates the first actuating motor to control the accelerator, and in the rear position it operates the second actuating motor to control the brake and in the vertical displacement the handle is blocked in its central position.

The advantage of the device according to the invention resides in its simplicity and the option to adapt it for both the physically impaired drivers and the physically competent drivers. With respect to the competent drivers the device provides the possibility of relief from long, rigid movements of the lower limbs during the periods of slow moving of vehicles in traffic jams. Another significant advantage resides in minimal requirements for space that the device occupies the interior of the cab reserved for the driver.

### DESCRIPTION OF THE DRAWING

The invention is further described with reference to the accompanying drawing where:

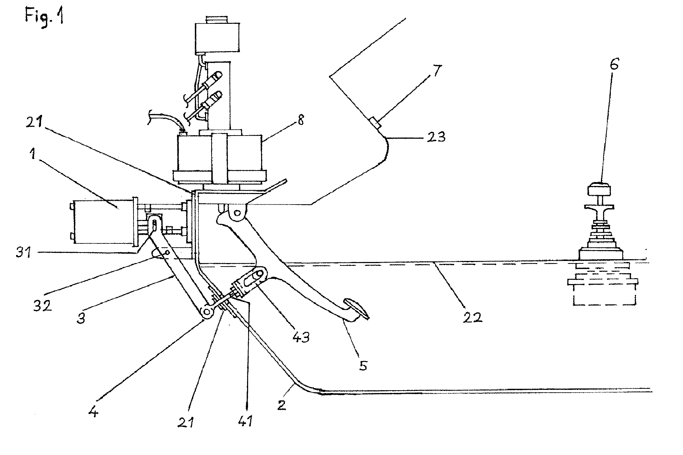

Fig. 1 - represents a schematic view of essential parts of the driving control system of a vehicle.

### EXAMPLES

The invention is described in detail on the example of the device to control the brake pedal of a vehicle preferably equipped with an automatic gearbox, whereby a similar arrangement can be applied to the accelerator pedal.

On the wall 2 of the vehicle cab, conventional devices for controlling the vehicle are installed. Such devices include a cylinder 8 of the booster braking system with a piston rod and appropriate hydraulic connections on the outer side of the vehicle cab wall 2 and a brake pedal 5 at the inner side of the vehicle cab wall 2.

According the invention an actuating motor 1 controlled by an appropriate conventional electric control circuit - not shown in the drawing - is secured to a support plate 21 on the outer side of the wall 2. The operating rod of the actuating motor 1 is connected through a slotted link 31 to a first arm of a two-armed lever 3 rotatably mounted on a pivot 32. The second arm of the two-armed lever 3 is pivotally coupled with a draw bar 4 passing through the wall 2 and provided with a threaded opposite end 41. The threaded opposite end 41 is screwed in a slotted link 43 for connection with the brake pedal 5. The hole through which the draw bar 4 passes the wall 2 of the cab is sealed by a resilient package 21. A joystick controller 6 is mounted on a central floor panel 22 of the cab for actuating by an electric signal a control circuit of the actuating motor 1.

To produce the respective electric signal for the control circuit of the actuating motor 1 the joystick controller 6 is linearly movable from the middle position to a front position and to a rear position and vertically movable in the middle, neutral position to enable its blocking in the middle position against an inadvertent use. On a dashboard 23 a central switch 7 enabling all controlling circuits is installed. The actuating motor 1 is a conventional linear reversible electromotor with a self-locking gear mechanism and constant speed adjustment movement. The range of its motion is defined by a microswitch circuit breaker actuated in a position corresponding to the extreme depressing of the brake pedal 5.

The connection between the threaded opposite end 41 of the draw bar 4 and the slotted link 43 serves for adjusting an appropriate position of the actuating motor 1 with respect to the position of the pedal 5. The adjustment is made upon disconnecting the slotted link 43 from the pedal 5 and screwing the slotted link 43 on the draw bar 4. The slotted link 43 between the pedal 5 and the draw rod 4 enables operation of the pedal by the driver foot independently from the function of the actuating motor 1 and the length of the slotted link 43.

The device can be used either for controlling the brake pedal 5 only by a single actuating motor 1 or, for controlling both the brake pedal and the accelerator pedal, each equipped by a separate actuating motor completed by the above described mechanism. To operate the accelerator, it is preferred to move the handle of the joystick controller 6 from its middle, i.e. neutral position forwardly. To operate the brake pedal is then naturally preferred to move the handle of the joystick controller 6 from the middle, neutral position towards the rear.

Due to very high demands on the sensitivity in comparison with the braking system, the electric control circuit for the actuating motor of the braking system may be provided with a computer system monitoring, for example, the engine speed.

All electrical circuits of the actuating motors are connected to the central switch 7. The start-up of the system is first initiated by shifting the blocked handle of the joystick controller upwardly and by enabling the central switch, for example by turning a key. The shut-down of the system is performed in the reverse order, when the joystick is first moved into its middle, neutral position.

### INDUSTRIAL APPLICABILITY

The device according to the invention can be used as part of a special equipment in the manufacture of automobiles, and as an additional equipment of the already used vehicles.

## Claims

1. Driving control system of a vehicle equipped with an automatic gearbox comprising an joystick controller (1) with a handle providing electrical connection for operating at least one actuating motor (1) associated with a mechanism for controlling a vehicle pedal (5) **characterized in that** the actuating motor (1) is coupled with a first arm of a two-armed lever (3) located outside the vehicle cab behind its wall (2) and the second arm of the two-armed lever (3) is coupled with a draw bar (4) passing through the cab wall (2) and coupled with a vehicle controlling pedal (5).

2. Device for controlling a vehicle according to claim 1 **characterized in that** the actuating motor (1) is coupled with the first arm of the two-armed lever (3) by means of a slotted link (31).

3. Driving control system of claim 1 or 2 **characterized in that** the draw bar (4) consists of a threaded rod (41) coupled to the two-armed lever (3) on the first end and to a slotted link (43) on the second end.

4. Driving control system of according to any one of claims 1 to 3 **characterized in that** it comprises a first actuating motor (1) with a mechanism for controlling the accelerator pedal and a second actuating motor (1) with a mechanism for controlling the brake pedal.

5. Driving control system of a vehicle according to claims 4 **characterized in that** the handle of the joystick controller (6) is linearly movable from its middle position to a front position and to a rear position to produce respective electric signals for control circuits of the actuating motors and vertically movable in the middle position, wherein in the front position the handle operates the first actuating motor to control the accelerator, and in the rear position it operates the second actuating motor to control the brake and in the vertical displacement the handle is blocked in its central position.
